# EUROPEAN PATENT APPLICATION

(11) **EP 4 036 565 A1**
(43) Date of publication of application: **03.08.2022**
(21) Application number: 21153801.2
(22) Date of filing: 27.01.2021
(51) Int. Cl.: G01N 27/12, B64D 15/20

(54) **DEVICE AND METHOD FOR DETECTING THE FORMATION OF ICE**

(71) Applicant: Université Libre de Bruxelles, 1050 Bruxelles (BE)
(72) Inventor: IORIO, Carlo Saverio, 1000 BRUXELLES (BE); DONGO, Patrice Désiré, 1060 BRUXELLES (BE); QUEECKERS, Patrick, 1180 BRUXELLES (BE); FARINA, Dario, 1060 BRUXELLES (BE); FABIANO, Simone, 60380 NORRKOPING (SE); CRISPIN, Xavier, 61771 KIMSTAD (SE); HAKANSSON, Anna, 61833 KOLMARDEN (SE)
(74) Representative: AWA Benelux

(57) **Abstract**

A device for detecting an icing condition and/or ice formation as described herein comprises a pair of electrodes, a sensing layer arranged in an electrical path between the pair of electrodes and means for measuring a first electrical characteristic of the electrical path. The sensing layer comprises an electrically conducting composite material, wherein the composite material has an electrical property, in particular electrical resistance, which shows a peak variation as a function of time at an onset of ice formation. The device comprises computing means for processing the first electrical characteristic to indicate an occurrence of an icing condition and/or ice formation.

## Description

### Technical field

The present invention is related to devices and related methods for detecting the occurrence of icing conditions and/or ice formation and accretion.

### Background art

Detecting ice formation on a structure is an important topic since it affects the performance of wings in an aircraft or blades of a wind turbine, or the efficiency of solar panels or a radar antenna. In the aeronautic field, for instance, counteracting ice formation is expensive in terms of power consumption and maintenance. Moreover, when not adequately detected, ice accretion could lead to catastrophic failures. It has been estimated that more than 10% of the fatal accident affecting aeronautical transportation are caused by icy conditions and ice formation. Detecting ice reliably becomes more and more a priority for safer skies.

It is known to detect icing conditions or ice formation based on optical, capacitive or resistive sensing. EP 3228543 describes an icing conditions detection system coupled to an ice protection system installed on a structure. The ice protection system comprises an electric heater having at least two heating elements located at positions on the structure experiencing substantially identical environmental conditions. The two heating elements are driven to heat the structure surface at two different temperatures. The power supplied to the heater elements is monitored as well as the surface temperature. A substantial difference in the power supplied to the two heater elements is indicative of the presence of icing conditions. This system requires hence measuring power of two heating elements at different locations of a structure, as well as corresponding surface temperature. However, often it may be difficult to define such locations subjected to substantially identical environmental conditions on a structure. Moreover, it is often difficult to reliably detect supplied power to the heater elements, since the supplied power can vary due to electrical component variability and temperature change.

US 2010/0078521 discloses a device for detecting and eliminating the presence of a layer of ice or liquid on a structure based on a capacitive sensor. The capacitive sensor comprises first and second subnetworks of conductive elements which are spaced apart and embedded in an insulating material. The dimensions and layout of the conductive elements are determined so they can detect a variation in capacity caused by the presence of ice or liquid that has penetrated into the insulating material. The insulating material hence must be permeable to the liquid and have a high coefficient of permittivity. However, capacitive sensing may be problematic in metal structures. Furthermore, since the conductive elements must be spaced apart by a material which must be permeable to water, these sensors require minimum height specifications in order to perform accurately.

An optical sensor for detecting ice on an aircraft is known from EP 3620380. The sensor includes a thermochromic device to sense a temperature of freestream air relative to a temperature threshold, and a hydrochromic device to sense an amount of moisture in the freestream air relative to a moisture threshold. Both devices require a LED and a photodiode and hence the sensor becomes bulky and requires space to embed it.

Other solutions, such as in EP 3517442, have tried to overcome the above disadvantages by providing a method of detecting icing conditions on an aircraft based on data which is readily available on the aircraft and without requiring additional, specific sensing. The data is fed to an appropriately trained machine learning algorithm to detect icing conditions.

### Summary

It has been appreciated that ice can form under varying circumstances of relative humidity and temperature, and that an early warning system is desirable. It is readily evident from the above disclosures that there is still a need in the art to provide an improved system or device and method of detecting icing conditions and/or ice formation on a structure. It is an object of the present invention to provide such systems/devices and methods which overcome the drawbacks of prior art systems and methods. It is an object of the present invention to provide such systems/devices and methods that are more reliable in predicting icing conditions or ice formation and/or that are of a simpler structure and more economical.

According to a first aspect of the invention, there is therefore provided a device for detecting icing conditions and/or ice formation as set out in the appended claims.

A device for detecting an icing condition and/or ice formation as described herein comprises at least a pair of electrodes, a sensing layer arranged in an electrical path between the pair of electrodes and means for measuring a first electrical characteristic of the electrical path. The sensing layer comprises or consists of an electrically conducting composite material, wherein the composite material has an electrical property, in particular electrical resistance, which shows a peak variation as a function of time at an onset of ice formation. The electrically conducting composite material is advantageously hygroscopic and/or hydrophilic and may or may not be porous or permeable to water.

By using a sensing layer having the above properties, a small and simple device for detecting the occurrence of icing conditions and/or ice formation is obtained. The detection of the electrical property, in particular electrical resistance can be effected through simple and cost-effective electrical circuits as known in the art. Furthermore, the sensing layer as indicated allows for an easy and reliable detection of the occurrence of icing conditions and/or ice formation under varying environmental conditions.

The device comprises computing means for processing the first electrical characteristic to indicate an occurrence of an icing condition and/or ice formation. The computing means is configured to determine a rate of change of a second electrical characteristic from measurements of the first electrical characteristic and to indicate the occurrence of an icing condition and/or ice formation based at least in part on the rate of change of the second electrical characteristic. The second electrical characteristic can refer to, or be, the electrical property as indicated above, in particular electrical resistance. Advantageously, the computing means is configured to process the second electrical characteristic through an artificial neural network to indicate or detect the occurrence. Advantageously, the computing means is configured to supply to the artificial neural network at least one additional parameter relating to the second electrical characteristic. The at least one additional parameter is advantageously obtained by processing a time curve of the second electrical characteristic.

Advantageously, the device as described herein can be incorporated in an aircraft, in particular on the wings thereof. The device can be incorporated in a wind turbine, in particular in the blades thereof. The device can be incorporated in a solar panel. In any of these structures, and beyond, the device can be operably coupled to a heating system or de-icing system.

According to a second aspect of the invention, there is provided a method of detecting icing conditions and/or ice formation, as set out in the appended claims.

### Brief description of the figures

Aspects of the invention will now be described in more detail with reference to the appended drawings, wherein same reference numerals illustrate same features and wherein:
Figure 1 represents a top view of a device according to aspects as described herein;
Figure 2 represents a cross section view of the device of Fig. 1 along the section line A-A;
Figure 3 represents a top view of an alternative device according to aspects as described herein;
Figure 4 represents a flow diagram of a method for detecting icing conditions or ice formation as described herein;
Figure 5 represents an experimental set-up of the device of Fig. 3;
Figure 6 represents a graph showing recorded values of temperature (31) at the exposed surface, optical reflection (32) of the exposed surface and electrical resistance (33) of the sensing layer as a function of time in an experiment with the set-up of Fig. 5;
Figure 7 represents a graph showing the recordings of electrical resistance (41) and optical reflection (42) of Fig. 6 as a function of temperature, instead of time;
Figure 8 represents a graph showing recordings of electrical resistance and time derivative of the electrical resistance in an experiment in which temperature was cycled about the freezing point with the set-up of Fig. 5;
Figure 9 represents a diagram graphically depicting how a resistance freezing response is calculated;
Figure 10 represents a graph showing the resistance freezing response for the materials of Table 1 as a function of the rate of change of the electrical resistance with temperature (dR/dT) determined for a specified temperature range;
Figure 11 represents a graph showing recorded values of temperature at the exposed surface and normalized electrical resistance (R_{N}) of the sensing layer as a function of time in an experiment with the set-up of Fig. 5 for a sensing layer of 100 µm thickness made of 1:2.5 PEDOT:PSS + 0.1% GOPS. A comparative experiment in which the same sensing layer was covered with lubricant oil is given as well;
Figure 12 represents a graph showing recorded values of temperature at the exposed surface and normalized electrical resistance (R_{N}) of the sensing layer as a function of time in an experiment with the set-up of Fig. 5 for a sensing patch formed with five stacked layers with total thickness of 500 µm and made of 1:2.5 PEDOT:PSS + 0.1% GOPS. A comparative experiment in which the same sensing layer was covered with lubricant oil is given as well;
Figure 13 represents a graph showing recorded values of temperature at the exposed surface and normalized electrical resistance (R_{N}) of the sensing layer as a function of time in an experiment with the set-up of Fig. 5 for a sensing layer of 600 µm thickness and made of 1:2.5 PEDOT:Tos. A comparative experiment in which the sensing layer was covered with lubricant oil is given as well.

### Detailed Description

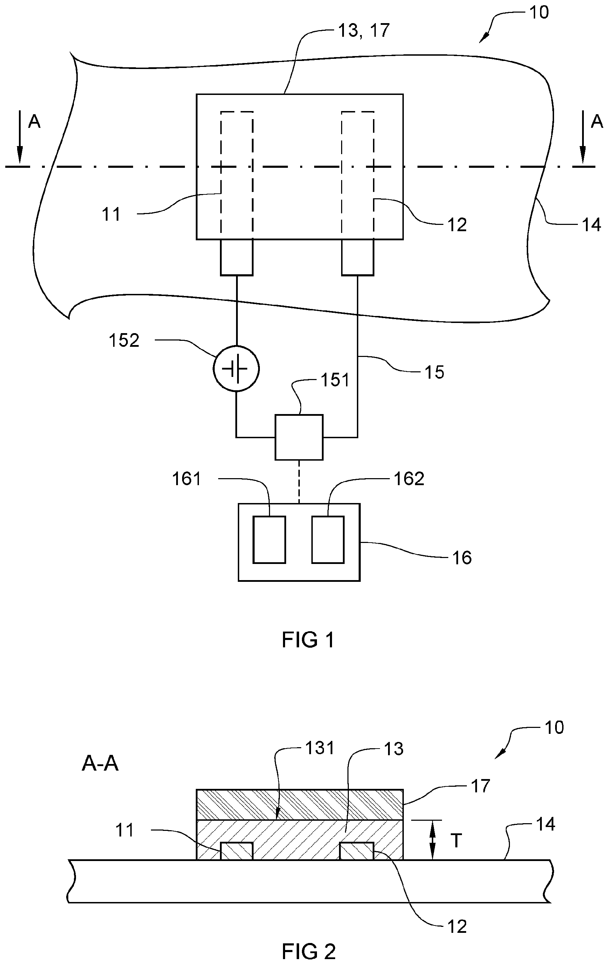

Referring to Figs. 1 and 2, a device 10 for detecting an icing condition and/or ice formation comprises a pair of electrodes 11, 12 arranged on a nonconductive substrate 14. The electrodes can be made of any suitable electrically conductive material, such as copper, aluminium, silver and gold. Advantageously, the electrodes 11, 12 may be made of, or comprise graphene. Graphene has a very good stability in terms of electrical resistance against temperature variations, allowing for more cost-effective measurements of the electrical properties of the electric circuit in which the graphene electrodes are embedded. The substrate 14 can be made of any suitable material such as glass or a polymer, plastic, or composite material. The substrate 14 can be arranged on a structure of interest, such as an aircraft, a wind turbine or a solar panel. Alternatively, the substrate 14 can be a part of the structure of interest and the device 10 can be assembled onto it.

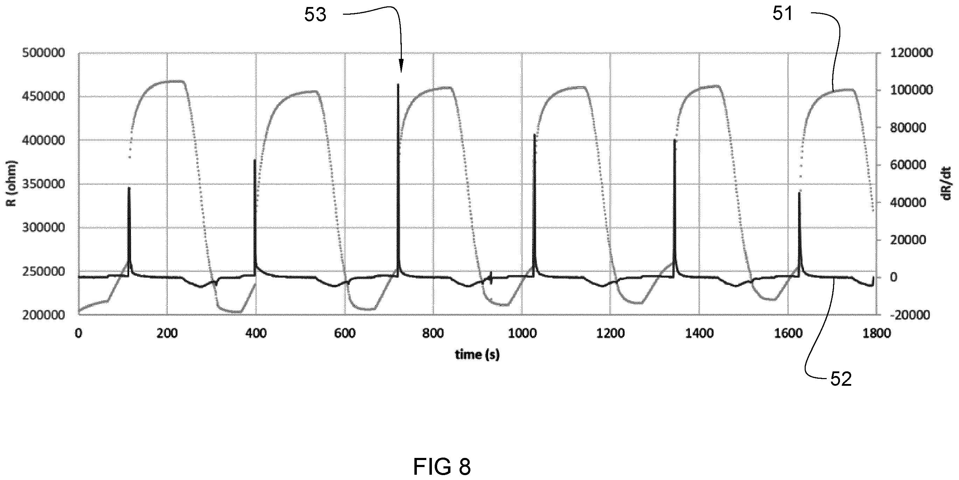

The electrodes 11, 12 are spaced apart. A sensing layer 13 is arranged on top of the electrodes 11, 12 and extends between them. The sensing layer 13 advantageously contacts the electrodes 11, 12. The electrodes 11, 12 can be at least partially embedded in the sensing layer 13. The sensing layer 13 comprises an electrically conductive material and is hygroscopic and/or hydrophilic. A characteristic of the material of sensing layer 13 is that an electrical property of the material, such as electrical resistance, changes when, in the environment in which it is placed, icing conditions occur, or ice is formed. Fig. 8 shows a curve of the electrical resistance 51 as a function of time and the corresponding rate of change of the electrical resistance per time unit (dR/dt) 52 for an exemplary embodiment of the sensing layer 13. A sudden change of the electrical resistance 51 occurs upon ice formation and/or at icing conditions. Here, ambient conditions leading to ice formation were cycled several times. The time instant at which ice starts to be formed is discernible by the peaks 53 in graph 52. Advantageous properties of the sensing layer 13 are described further below.

The electrodes 11, 12 are coupled in an electric circuit 15. An electrical path of circuit 15 runs from one electrode 11 to the other electrode 12 through the sensing layer 13. The electric circuit 15 allows a first electrical characteristic of the electrical path, such as voltage or current, to be measured. By way of example, the circuit 15 can comprise a measurement unit 151 configured to measure the first electrical characteristic. Circuit 15 can comprise other suitable components, such as e.g. a power source 152.

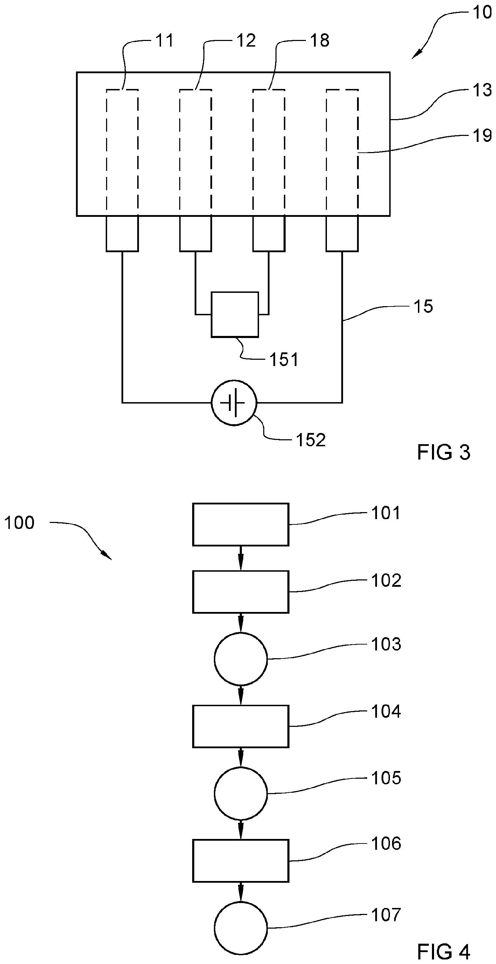

In Fig. 1, a diagram of a two-point probe system, having two electrodes 11, 12, is shown. It will be appreciated that other probe systems may be used for measuring the first electrical characteristic, such as a four-point probe system, as shown in Fig. 3, which comprises four electrodes 11, 12, 18 and 19. The sensing layer 13 is arranged in an electric path between at least two of the four electrodes and may be arranged on top of, and in contact with all four electrodes, even though this is not a requirement. Electric circuit 15 comprises a power source 152 coupled between electrodes 11 and 19, and measurement unit 151 is connected between electrodes 12 and 18.

Referring again to Figs. 1 and 2, the measurement unit 151 is coupled to a computing unit 16. Measurements of the first electrical characteristic performed by measurement unit 151 are fed to computing unit 16. Computing unit 16 can comprise a microprocessor 161 and a memory system 162. The memory system 162 stores computer program code executable by the microprocessor 161. The memory system 162 can additionally store measurement data from the measurement unit 151. The computer program code is configured to process the measurements received from the measurement unit 151 to detect the occurrence of an icing condition or ice formation.

In one exemplary embodiment, the computer program code, when executed, compares whether an indicator, derived from the first electrical characteristic, exceeds a predetermined threshold value. The indicator refers to a value representative of a second electrical characteristic, derived from the first electrical characteristic. By way of example, the first electrical characteristic can be voltage or current, and the second electrical characteristic can be electrical resistance of the electrical path comprising the sensing element 13. The second electrical characteristic can be scaled and/or normalized to form the indicator. In addition or in the alternative, other suitable operations can be performed on the second electrical characteristic to arrive at the indicator, such as averaging, low-pass or high-pass band filtering, etc. It is alternatively possible to use the first electrical characteristic as the second electrical characteristic, i.e. the second electrical characteristic is the first electrical characteristic. The second electrical characteristic can be used as the indicator, without any substantial processing.

In an advantageous embodiment and referring to Fig. 4, however, the computer program code, when executed, carries out a method 100 to detect the occurrence of an icing condition, or ice formation. In a step 102, the method 100 processes the measurement data of the first electrical characteristic, and based thereon, determines a rate of change of a second electrical characteristic 103, which can be the first electrical characteristic, such as current or voltage, or another electrical characteristic, such as electrical resistance. The measurement data used in step 102 is obtained by measurement unit 151 in a step 101 and fed to the computing unit 16.

The rate of change of the second electrical characteristic 103 advantageously refers to a time derivative. It can alternatively refer to any other useful derivative, such as a temperature derivative, i.e. a rate of change of the second electrical characteristic as a function of temperature. The latter case would require data logging of temperature. However, in certain structures, such as aircraft, temperature measurements are readily available and no further sensing devices need be provided. The memory unit 162 can store the measurements of the first electrical characteristic along with their corresponding time stamps.

In step 104, the computer program code processes the rate of change of the second electrical characteristic to output a signal 107 indicating whether, or to what extent, an icing condition occurs, or whether or to what extent, ice is formed. The computer program code can process the rate of change of the second electrical characteristic in step 104 to determine an indicator 105. By way of example, the rate of change of the second electrical characteristic can be scaled and/or normalized to form the indicator. In addition or in the alternative, other suitable operations can be performed on the rate of change to arrive at the indicator, such as averaging, low-pass or high-pass band filtering, etc. The rate of change of the second electrical characteristic can alternatively be used as the indicator 105, without any substantial processing. Using the rate of change of the second electrical characteristic as a basis for detecting icing conditions allows to obtain a much faster response and detecting the onset of ice formation at an earlier stage. This is particularly useful in applications where operation is critical to ice formation.

In step 106, the computer program code processes the indicator 105 to provide the signal 107. The indicator 105 can be compared to a threshold, and if the indicator 105 exceeds the threshold, a signal 107 is output indicative of the occurrence of icing conditions or ice formation. Different threshold levels can be provided, representative of different degrees of probability of the occurrence of icing conditions, e.g. certain, very probable, weakly probable, etc., and the indicator 105 can be compared to any one or multiple of them.

The computer program code can additionally take other data into account when construing the signal 107. One example is to take into account environmental data, such as one or more of temperature, pressure, altitude, wind speed, relative humidity etc. This is typically data readily available on-board an aircraft and does not need additional sensors. Another example is to take into account supplementary (parameterized) data relating to the curve of the second electrical characteristic (such as electrical resistance) versus time (or other variable, such as temperature) - refer to curve 51 or 52 of Fig. 8. By way of example, besides the rate of change of the second electrical characteristic, assessment of the time integral and/or time duration of the (steep) part of the curve immediately after and/or before the freezing detection can be taken into account to obtain a more reliable prediction. The additional data as indicated hereinabove can further be used to estimate the amount or thickness of ice accumulated on the surface, or the speed of accretion.

Advantageously, the computer program code can comprise an artificial neural network, particularly a deep learning network. The artificial neural network is trained to carry out step 106, and possibly step 104, to provide signal output 107. The artificial neural network can be fed with any of the data indicated above, e.g. not only indicator 105, but also one or more of environmental data and additional parameterizations of the (measured) curve of the second electrical characteristic.

The artificial neural network is trained with a training dataset, comprising relevant values of the indicator 105 (or the rate of change 103) and possibly additional data as indicated above, along with corresponding (observed) outcomes for signal 107. The training dataset can be obtained through available databases, laboratory experiments, and wind tunnel testing. The training dataset will determine the initial weights (and optional thresholds) of the network and give the artificial neural network an initial predictive capability.

Advantageously, the training dataset is at least in part built based on measurements from measurement unit 151, performed under varying environmental conditions, in particular under one or more of: different values of relative humidity, different values of temperature, different values of atmospheric pressure, and possibly any other environmental variables affecting ice formation.

The neural network advantageously uses as features the measurements obtained from circuit 15 as well as measurements of existing sensors on-board the aircraft. A training dataset can be obtained through available databases, laboratory experiments, and wind tunnel testing. The training dataset advantageously determines the initial weights of the artificial neural network and provides the artificial neural network an initial predictive capability.

The sensing layer 13 is advantageously made of a composite material based on, or comprising PEDOT (poly(3,4-ethylenedioxythiophene)) polymer or derivatives thereof. Specific examples of suitable PEDOT derivatives are: poly(3,4-ethylenedioxythiophene)-tetramethacrylate (PEDOT:TMA), poly(3,4-ethylenedioxythiophene) nanotubes-Iron(III) oxide composite, poly(3,4-ethylenedioxythiophene) bis-poly(ethyleneglycol), possibly lauryl terminated and poly(3,4-ethylenedioxythiophene)-block-poly(ethylene glycol). Of these, PEDOT and PEDOT:TMA are preferred. One benefit of PEDOT:TMA is its improved corrosion resistance. These composites can be synthesized according to known recipes, and are typically synthesized by polymerization of EDOT monomer 3,4-ethylenedioxythiophene in presence of a second (polymer) compound.

A preferred PEDOT-based composite comprises a mixture of PEDOT (or derivative thereof) and poly(styrenesulfonate) (PSS), which mixture is also referred to as PEDOT: PSS. PEDOT: PSS is a doped p-type semiconductor where holes on the positively charged PEDOT chains are compensated by the sulfonate anions on the negatively charged PSS chains, acting as counterions. It is a mixed ion-electron conductor where cations are transported in the PSS rich domains and electrons through the PEDOT. A PEDOT:PSS material is electrically conductive.

An alternative suitable composite material for use as the sensing layer comprises a mixture of PEDOT and a p-toluenesulfonate group (tosylate or Tos), such as iron(III) p-toluenesulfonate Fe(CH₃CeH₄SO₃)₃. The PEDOT:Tos composite can be synthesized through polymerization of (3,4-ethylenedioxythiophene) monomers in presence of iron(III) p-toluenesulfonate, according to known recipes.

PEDOT-based films are known for use as temperature sensors, having an electrical resistance which decreases with increasing temperature. The inventors have now surprisingly observed that when ice is formed, the electrical resistance curve of the PEDOT-based layer makes a sudden jump over multiple kΩ, e.g. at least 5 kΩ, 10 kΩ or even more. This is not observed in dry conditions not leading to ice formation.

It was further observed that the resistance response of the PEDOT-based layer at ice formation is more pronounced for PEDOT mixtures having a greater temperature dependency of the electrical resistance, i.e. where the electrical resistance shows a larger variation for a same temperature difference.

Advantageously, the weight ratio of PEDOT in the polymer composite material of the sensing layer is between 5% and 60%, advantageously between 7.5% and 50%, advantageously between 10% and 40%. Particularly for PEDOT:PSS polymer composites, the ratio of PEDOT to PSS is between 1:1 and 1:12 on a dry weight basis, advantageously between 1:1.5 and 1:10, advantageously between 1:2 and 1:8. Within the indicated amounts, the PEDOT-based composite shows a suitable resistance response to temperature.

The PEDOT-based polymer composite is advantageously crosslinked. Particularly suitable cross-linking agents are methoxysilane-based molecules. A particularly preferred methoxysilane-based cross-linking agent is GOPS (3-glycidyloxypropyl)trimethoxysilane. A weight ratio of cross-linking agent in the polymer composite material of the sensing layer is advantageously between 0.02% and 5%, advantageously between 0.05% and 2%, advantageously between 0.05% and 0.5%.

The composite material of the sensing layer can comprise additional compounds to enhance desirable electrical, mechanical and/or chemical properties. By way of example, the composite material can comprise a conductivity improving compound, in particular one or more of: dimethyl sulfoxide (DMSO), ethylene glycol and propylene glycol, e.g. in an amount between 0.01% and 20% by weight, advantageously between 0.05% and 10% by weight, advantageously between 0.1% and 5% by weight. Alternatively or in addition, the composite material can comprise stabilizers, such as UV stabilizers. One suitable class of UV stabilizers are formamidine UV-absorbers, such as UV-1 (MPI Chemie, The Netherlands).

The composite material can comprise suitable additives, e.g. as fillers or reinforcement, advantageously in a proportion between 0.1% and 25% by weight, advantageously between 0.5% and 10% by weight. The composite material can e.g. comprise fibres, in particular nanofibres, advantageously having a fibril width or diameter of 10 µm or less, advantageously 1 µm or less, advantageously 500 nm or less, advantageously 100 nm or less. The fibril width can e.g. be between 1 nm and 100 nm. The above values refer to average values of fibril width or diameter. Alternatively, the above values refer to median values of fibril width or diameter. The nanofibres can have a length larger than or equal to 100 nm, such as larger than or equal to 250 nm, or larger than or equal to 500 nm. Specific examples of suitable nanofibres are: nanofibres of cellulose and carbon nanofibres.

A further advantage of PEDOT-based composites is that they can be applied on a substrate by printing as an ink. This allows to cover larger and complex-shaped surfaces with greater ease and at reduced cost.

It has been observed that the thickness of the sensing layer, in particular of the PEDOT-based composites can influence the resistance response at ice formation. The sensing layer advantageously has a thickness between 10 nm and 5000 nm (5 µm), advantageously between 25 nm and 2500 nm, with thicknesses of 1000 nm or less being preferred. At the indicated thicknesses, the resistance response upon ice formation was observed to be optimal. The thickness of the sensing layer can refer to the distance T between the substrate 14 and an exposed surface 131 of the sensing layer (Fig. 2).

Referring again to Figs. 1, 2, a water-permeable protective layer 17 can be arranged on top of the sensing layer 13 to protect the sensing layer 13 from erosion and other degrading influences. Suitable protecting layers are polyelectrolyte layers which are not water soluble, such as Nafion^{®} ion-exchange membranes, or ultrafiltration, nanofiltration, forward osmosis and reverse osmosis membranes.

The device 10 for detecting icing conditions as described herein can be used in any suitable structure, such as on the wings of an aircraft, or the blades of a wind turbine. Advantageously, the device 10 can be coupled to a de-icing system, possibly comprising heating elements for local or general de-icing of the structure, as known in the art.

### Experiments

A four-point probe electrode system was used, as depicted in Fig. 3. The sensing layer was prepared as follows. A solution of 1:2.5 w/w PEDOT:PSS was filtered with a polyvinylidene fluoride (PVDF) filter. Various proportions of GOPS, DMSO, etc. were added to the initial solution of PEDOT:PSS. The obtained solutions were then mixed by ultrasound for 5 minutes to obtain a uniform solution.

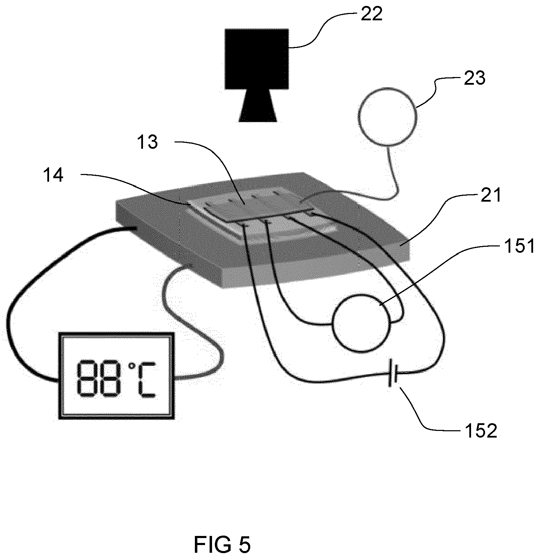

Referring to Fig. 5, the PEDOT:PSS composite solution prepared as above was deposited on the substrate 14 and the four electrodes as a film to act as sensing layer 13. The substrate 14 consisted of a glass plate, and the electrodes were arranged directly on the glass substrate. Thin films with thickness less than or equal to 500 nm were obtained by spin coating the sonicated solution followed by drying in an oven at 100°C for 30 min. Thick films of the sensing layer larger than 500 nm were obtained by drop casting the sonicated solution on the substrate followed by drying at room temperature for a day.

The glass substrate was arranged on top of a Peltier cooling element 21 of which the temperature was controlled. The actual temperature on top of the sensing layer 13 was monitored using a thermocouple 23. The sensing layer 13 was exposed and no protective layer was arranged on top. The electrical resistance was measured by a source meter connected to the four electrodes and further feeding measured results to LabView^{®} for conversion to electrical resistance. A camera 22 was mounted above the sensing layer to measure optical reflection. The optical reflection of the exposed surface of the sensing layer was determined by analyzing the camera images in terms of mean grey value, being the average grey value within a selection. This is the sum of the grey values of all the pixels in the selection divided by the number of pixels. Mean grey value analysis of the video images was performed with ImageJ software program. The complete setup was placed in a chamber with controlled humidity level.

### Experiment 1

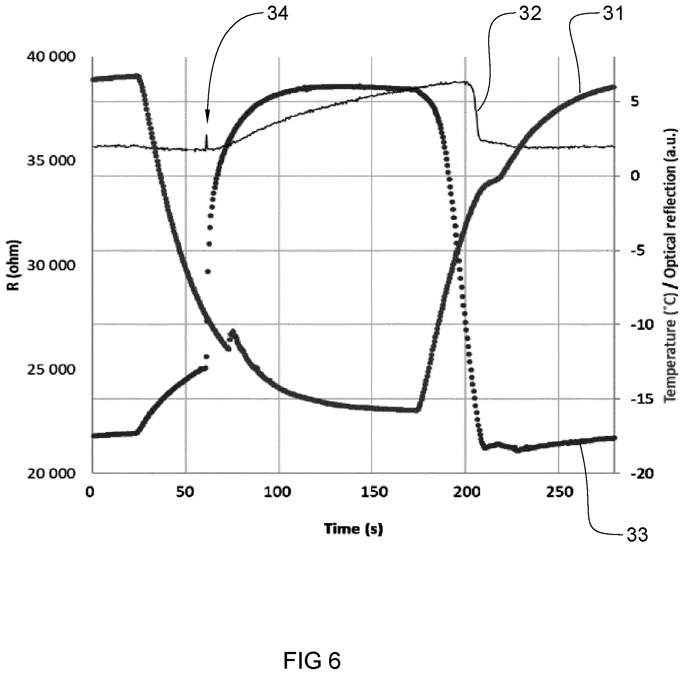

In a first experiment, a thin film of sensing layer according to ID No. 1 of Table 1 was used. The chamber was brought to 40% RH (relative humidity) and the Peltier element was cooled to pass the freezing point. Fig. 6 shows the recorded data of temperature 31, optical reflection 32 and electrical resistance 33 of the sensing layer as a function of time. The PEDOT-based semiconducting sensing layer shows initially an increased resistance that follows the temperature decrease. When ice is formed on the exposed surface (which is shown by the sudden peak 34 in the optical reflection at about t = 60 s, the resistance however clearly deviates from the temperature variation, making a distinct jump from about 25 kΩ to about 37 kΩ.

The same experiment was repeated in a low humidity (∼ 3% RH) environment. No ice was formed on the exposed surface and no jump in resistance was observed.

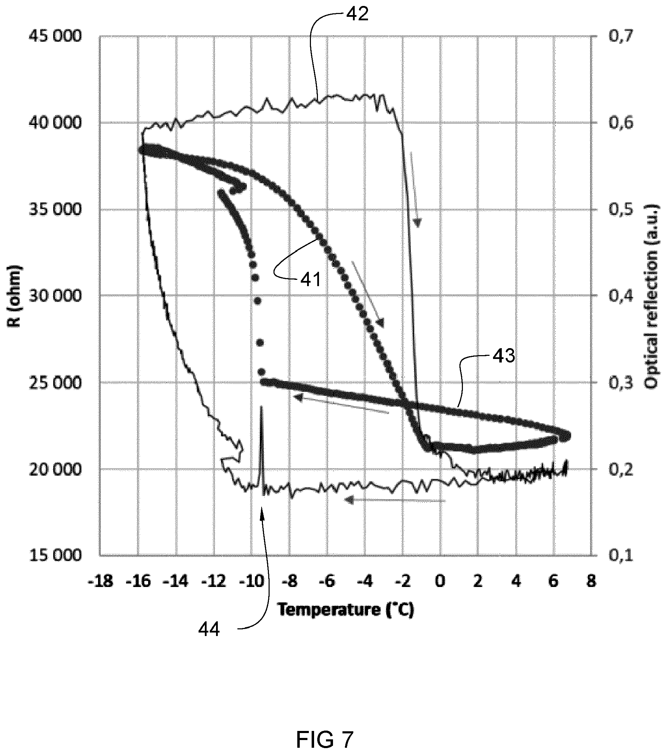

The data of Fig. 6 is shown in an alternative way in Fig. 7. The resistance response 41 and optical reflection 42 is drawn as a function of temperature, instead of time. From this graph, it becomes clear that the initial, quasi linear evolution 43 between resistance and temperature, which is due to the semiconducting character of the PEDOT-based layer is lost upon formation of ice at event 44. This indicates that the effect seen is not at all expected from a perspective of charge transport in a semiconductor. There is an additional effect, which is dominant and kicks in, leading to making the film sensitive to ice formation.

### Experiment 2

In a following experiment, the sensing layer of experiment 1 was cycled multiple times about the freezing point, at same relative humidity value of 40%. Fig. 8 shows the measured electrical resistance 51 and the momentum variation of the electrical resistance per time unit (dR/dt) 52 that was derived from it. The time derivative of the electrical resistance, dR/dt 52 clearly indicates the time instant at which ice starts to be formed, providing an easy and early indication of the onset of icing conditions or ice formation. From the graph, it becomes clear that the freezing/melting procedure can be cycled several times. The resistance is recovered when the ice is removed and the freezing response curve substantially repeats when ice is again formed. This indicates that the system is rather stable in the sense that the freezing point can reliably be measured at each repetition.

### Experiment 3

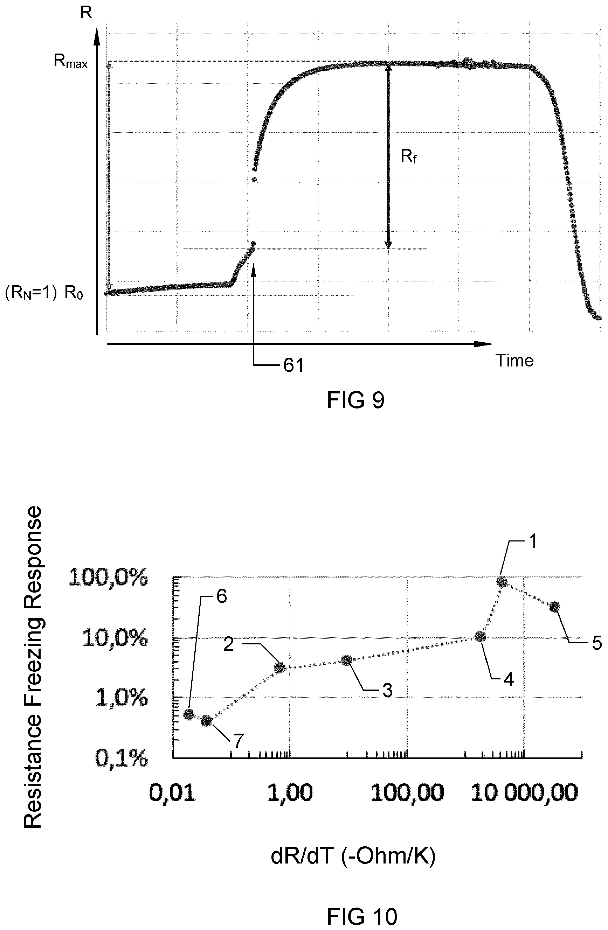

In a further experiment, different composites were tested for their resistance response. Table 1 lists the material compositions, film thickness of the sensing layer and resistance freezing response (RFR). Referring to Fig. 9, the RFR of a material is defined as RFR = 0.8 (Rₘₐₓ - R₀)/R₀. R₀ refers to the resistance value of the sensing layer at the time instant and temperature at which the freezing cycle was started. The resistance value R₀ also refers to the reference resistance value used to obtain normalized resistance values R_{N}, where all resistance values are divided by R₀. Rₘₐₓ refers to the maximal resistance value measured during a freezing cycle. The value 0.8 in the above formula is a simplified approach to obtain an RFR which is close to the actual jump R_{f} in resistance at the freezing point 61. In Table 1, the resistance freezing response is expressed in percentage values.

In Fig. 10, the RFR for each material of Table 1 is set out versus its dR/dT (the variation in electrical resistance per temperature unit), which was measured in the range between 5°C and 10°C, which was above the freezing point and without ice. The numbers refer to the ID No. of Table 1. The graph shows that a material having a larger dR/dT generally will have a larger resistance freezing response.

**Table 1: Composition of different PEDOT-based composites, film thickness deposited and corresponding resistance freezing response**

| ID No. | Composition (by weight) | Thickness (nm) | Resistance Freezing Response (RFR) |
|---|---|---|---|
| 1 | 1:2.5 PEDOT:PSS, 0.1% GOPS | 100 | 80% |
| 2 | 1:2.5 PEDOT:PSS, 0.1% GOPS | 300 | 4% |
| 3 | 1:2.5 PEDOT:PSS, 0.1% GOPS | 1000 | 5% |
| 4 | 1:2.5 PEDOT:PSS, 1% GOPS | 200 | 10% |
| 5 | 1:6 PEDOT:PSS, 0.1% GOPS | 50 | 30% |
| 6 | 1:2.5 PEDOT:Tos | 600 | 0.5% |
| 7 | 1:2.5 PEDOT:PSS, 0.1% GOPS, 5% DMSO | 100 | 0.4% |

### Experiment 4

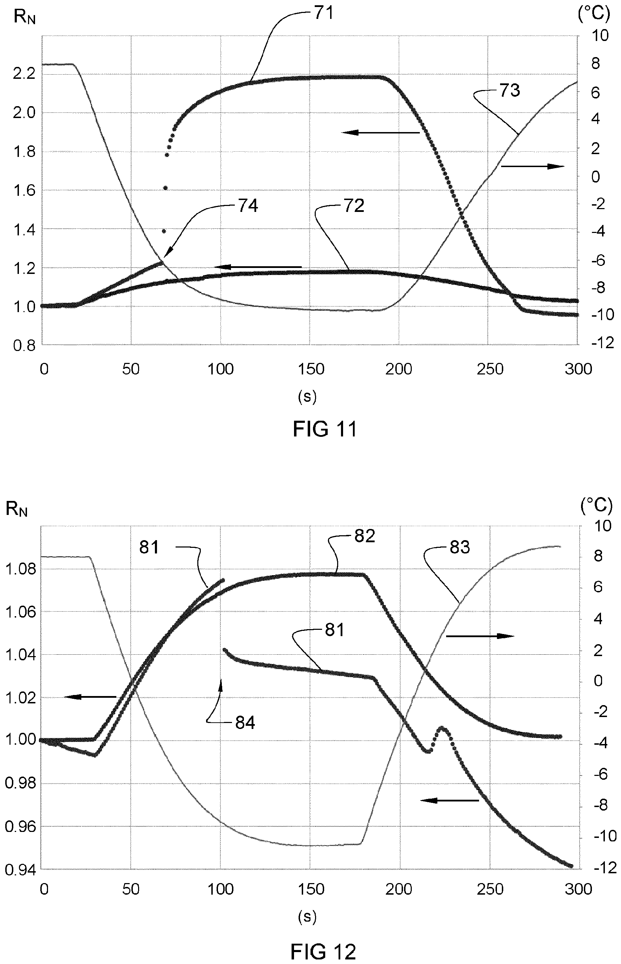

In a further experiment, the sensing layer according to ID No. 1 of Table 1 was used. The chamber was brought to 40% RH and the Peltier element was cooled obtaining a temperature curve 73 as shown in Fig. 11. The resulting normalised resistance R_{N} (normalised w.r.t. the initial resistance at time t=0s) is shown as curve 71. The onset of freezing was observed to occur at time instant 74, leading to a sudden increase of the resistance. A comparative experiment was carried out under identical circumstances, where the sensing layer was covered/impregnated with lubricant oil. The obtained normalised resistance is given by curve 72 and no sudden change or discontinuity in the resistance was observed at freezing.

### Experiment 5

A sensing layer of 100 µm thickness was prepared with a composition 1:2.5 PEDOT:PSS with 0.1% GOPS and 5% cellulose nanofibres by weight. The cellulose nanofibres had a mean firbil width of 50 nm and length larger than 100 nm and were obtained from the Process Development Center, the University of Maine, USA. For a same temperature excursion as in experiment 4, a qualitatively same resistance curve was obtained as curve 71 of Fig. 11.

### Experiment 6

On top of the sensing layer of experiment 4, four further layers with the same composition as experiment 4 were applied, each 100 µm thick, to obtain a five-layer sensing patch with total thickness of 500 µm. The obtained setup was subjected to same cooling conditions as experiment 4, and the graph of Fig. 12 was obtained. The temperature curve 83 is reasonably similar to temperature curve 73 of experiment 4. However, the normalised resistance 81 shows a sudden decrease at the freezing point 84. The normalised resistance curve 81 also does not immediately recover to the initial value when the initial temperature is restored. In contrast, a comparative experiment where the 5-layer sensing patch was covered with lubricant oil showed a normalised resistance curve 82 with no sudden changes or discontinuities.

### Experiment 7

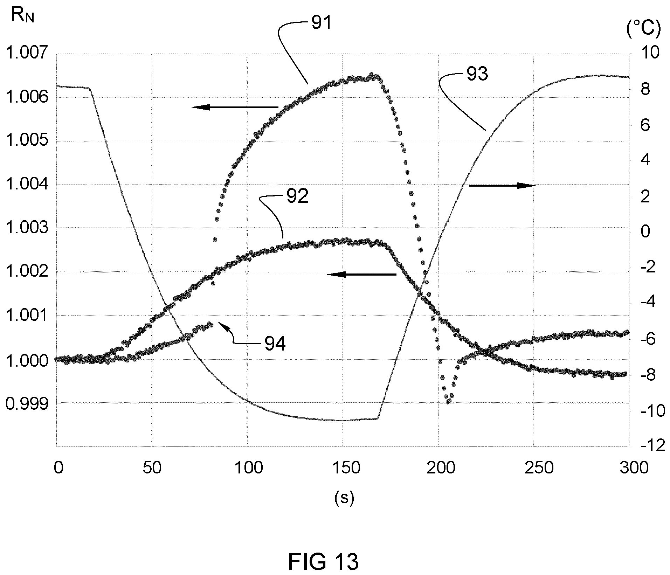

The sensing layer according to Table 1, ID No. 6 was used. This sensing layer was obtained as a single-layer. The chamber was brought to 40% RH and the Peltier element was cooled obtaining a temperature curve 93 as shown in Fig. 13. The resulting normalised resistance R_{N} (normalised w.r.t. the initial resistance at time t=0s) is shown as curve 91. The onset of freezing was observed to occur at time instant 94, leading to a sudden increase of the resistance. A comparative experiment was carried out under identical circumstances, where the sensing layer was covered/impregnated with lubricant oil. The obtained normalised resistance R_{N} is given by curve 92 and no sudden change or discontinuity in the resistance was observed at freezing.

## Claims

1. Device (10) for detecting an icing condition and/or ice formation, comprising:
a pair of electrodes (11, 12),
a sensing layer (13) arranged in an electrical path between the pair of electrodes,
means (151) for measuring a first electrical characteristic of the electrical path,
**characterised in that** the sensing layer (13) comprises an electrically conducting composite material, wherein the composite material has an electrical property which shows a peak variation as a function of time at an onset of ice formation, and
**in that** the device comprises computing means (16) for processing the first electrical characteristic to indicate an occurrence of an icing condition and/or ice formation.

2. Device of claim 1, wherein the electrically conducting composite material comprises poly(3,4-ethylenedioxythiophene) or derivatives thereof, in particular one or more of: poly(3,4-ethylenedioxythiophene) and poly(3,4-ethylenedioxythiophene)-tetramethacrylate.

3. Device of claim 2, wherein the electrically conducting composite material further comprises one or more of: poly(styrenesulfonate) and a p-toluenesulfonate group.

4. Device of claim 2 or 3, wherein the electrically conducting composite material comprises a cross-linking compound, in particular a methoxysilane-based compound, more particularly (3-glycidyloxypropyl)trimethoxysilane.

5. Device of any one of the preceding claims, wherein the pair of electrodes (11, 12) are at least in part made of graphene.

6. Device of any one of the preceding claims, wherein the computing means (16) is configured to determine a rate of change of a second electrical characteristic from measurements of the first electrical characteristic and to indicate the occurrence of an icing condition and/or ice formation based at least in part on the rate of change of the second electrical characteristic.

7. Device of claim 6, wherein the second electrical characteristic is an electrical resistance.

8. Device of claim 6 or 7, wherein the rate of change is a time derivative or a temperature derivative.

9. Device of any one of the preceding claims, wherein the computing means (16) is implemented with an artificial neural network trained to detect the occurrence of an icing condition and/or ice formation based on measurements of the first electrical characteristic.

10. Device of claim 9 in combination with any one of the claims 6 to 8, wherein the computing means (16) is configured to input the rate of change of the second electrical characteristic to the artificial neural network.

11. Device of claim 9 or 10, wherein the artificial neural network is trained with a training dataset, wherein the training dataset comprises values representative of rates of change of the second electrical characteristic determined under varying environmental conditions, in particular under one or more of:
different values of relative humidity,
different values of temperature, and
different values of atmospheric pressure.

12. Device of any one of the preceding claims, comprising a water-permeable protective layer (17) arranged on the sensing layer.

13. Aircraft, comprising the device of any one of the preceding claims.

14. Method of detecting an occurrence of an icing condition and/or ice formation, comprising:
measuring a first electrical characteristic of an electrical path, wherein the electrical path comprises a sensing layer (13) as recited in any one of the claims 1 to 4, wherein the electrically conducting composite material has an electrical property which shows a peak variation as a function of time at an onset of ice formation, and
processing the first electrical characteristic to indicate an occurrence of an icing condition and/or ice formation.

15. Method of claim 14, wherein the processing step comprises determining a rate of change of a second electrical characteristic from measurements of the first electrical characteristic, and indicating the occurrence of an icing condition and/or ice formation based at least in part on the rate of change of the second electrical characteristic, particularly by feeding the rate of change of the second electrical characteristic to an artificial neural network.
